# EUROPÄISCHE PATENTANMELDUNG

(11) **EP 1 361 306 A1**
(43) Veröffentlichungstag der Anmeldung: **12.11.2003**
(21) Anmeldenummer: 03009924.6
(22) Anmeldetag: 30.04.2003
(51) Int. Cl.: D06F 37/20

(54) **Befestigungsvorrichtung für die Befestigung eines Stossdämpfers einer Waschmaschine**

(30) Priorität: 06.05.2002 ES 200201121
(71) Anmelder: BSH Balay, S.A., 50059 Zaragoza (ES)
(72) Erfinder: Gracia Bobed, Ismael, ES-50194 Zaragoza (ES)
(74) Vertreter: Thoma, Lorenz

(57) **Zusammenfassung**

Befestigungsvorrichtung für die Befestigung eines Stoßdämpfers einer Waschmaschine, bei der die Stoßdämpfer (9) die Mittel für die Aufhängung des Schwingsystems am Rahmen (11) der Waschmaschine darstellen. Diese Vorrichtung besteht aus einem einteiligen Stück (1) mit einem ersten Teil (2) und einem zweiten Teil (3), die einen Winkel bilden, wobei der erste Teil (2) für die Befestigung des Stücks (1) am Rahmen (11) ausgelegt ist und der zweite Teil (3) mit dem Ende des Stoßdämpfers (9) verbindet und sich daran anpasst.

## Beschreibung

### GEBIET DER ERFINDUNG

Die hier vorliegende Erfindung betrifft eine Befestigungsvorrichtung, die es ermöglicht, das Schwingsystem einer Waschmaschine im Wesentlichen bestehend aus Laugenbehälter, Trommel und Antrieb, am Rahmen dieser Waschmaschine zu befestigen, und zwar auf einfache Weise und mit einer minimalen Anzahl von Teilen.

### STAND DER TECHNIK

Gegenwärtig wird die Befestigung der Stoßdämpfer, die in Waschmaschinen für Kleider eingesetzt werden und die das Schwingsystem aufgehängt am Grundrahmen der Maschine befestigen, hauptsächlich mit einem Stück in U-Form bereitgestellt, dessen Schenkel Öffnungen umfassen, durch die eine Achse läuft, die ihrerseits durch die Öffnung des Endes des Stoßdämpfers geführt wird.

In einigen Fällen wird das Stück in U-Form in zwei Teile geteilt, was zu einer Verlängerung der Einbauzeiten führt und / oder eine Schwierigkeit für den Zugang zur besagten Befestigungsvorrichtung darstellt.

### BESCHREIBUNG DER ERFINDUNG

Die Erfindung betrifft eine Befestigungsvorrichtung, die es ermöglicht, die in Waschmaschinen, insbesondere Maschinen zum Waschen von Kleidern, eingesetzten Stoßdämpfer zu befestigen, und zwar auf einfache Weise und mit der geringst möglichen Anzahl von Elementen, die auf Grund ihrer besonderen Beschaffenheit in den Stoßdämpfer selbst integriert sein oder daran befestigt werden können, so dass der Einbau dieser Stoßdämpfer in einer Fertigungskette für Waschmaschinen ungeheuer vereinfacht wird.

Die Vorrichtung ermöglicht die Integration in den Stoßdämpfer selbst, und zwar unabhängig vom Hersteller oder Zulieferer der in die Maschine einzubauenden Stoßdämpfer.

Sie umfasst im Wesentlichen ein einteiliges Stück mit einem ersten Teil und einem zweiten Teil, die einen Winkel bilden, wobei der erste Teil für die Befestigung des Stücks am Rahmen ausgelegt ist und der zweite Teil sich mit dem Ende des Stoßdämpfers verbindet und daran anpasst.

Gemäß einem Merkmal der Erfindung besitzt der erste Teil des Stücks einen Bereich, an dem sich ein Befestigungsmittel anpasst. Diese Befestigung erreicht, dass es gut am Rahmen befestigt wird, ohne irgendwelche Öffnungen, durch die der Lärm der Vibrationen entweichen kann.

Gemäß einer anderen Eigenschaft der Erfindung besitzt der zweite Teil, der mit dem ersten Teil einen Winkel bildet, einen ersten Bereich, an dem das Ende des Stoßdämpfers verbunden ist, und an seinem Ende ein Mittel für die Befestigung des Stoßdämpfers.

Diese Befestigungsform ermöglicht einen einfachen und billigen Einbau, denn es muss nur der Stoßdämpfer an das Stück durch die Öffnung des Endes des Stoßdämpfers angepasst werden. Und mit dem Befestigungselement am Ende wird die Befestigung erleichtert.

In einer Ausführungsform der Erfindung ist der zweite Teil des einteiligen Stücks mit einem Bereich für die Anpassung eines Befestigungsmittels versehen. So kann darin, im Fall, dass das vorausgehende Befestigungsmittel bei der Reparatur des Apparats versagt, zum Beispiel eine Schraube selbstschneidend eingedreht werden, um die Lage des Stoßdämpfers zu sichern, wobei das Stück weiterhin verwendet werden kann.

Die Anpassung erfolgt über ein elastisches Element oder elastischen Block am Ende des Stoßdämpfers. Damit werden die Geräusche verringert, die von der Vibration des Apparats während dem Betrieb erzeugt werden.

Gemäß eines Merkmals der Erfindung ist der Winkel, den der erste und zweite Teil bilden, ein 90-Grad-Winkel.

Das einteilige Stück funktioniert also, als ob es ein überhängender Balken wäre, der an seinem Ende aufliegt. Da es ein überhängender Balken ist, kann dieser so lang wie gewünscht gemacht werden und den Stoßdämpfer weiter vom Befestigungspunkt am Rahmen entfernt befestigen, so dass mehr Vibrationen gedämpft und die Geräusche verringert werden können.

Im Nachstehenden werden für ein besseres Verständnis dieser Beschreibung und als Bestandteil derselben Figuren beigefügt, in denen als Erläuterung und nicht einschränkend der Gegenstand der Erfindung gezeigt wird.

### KURZE BESCHREIBUNG DER ZEICHNUNGEN

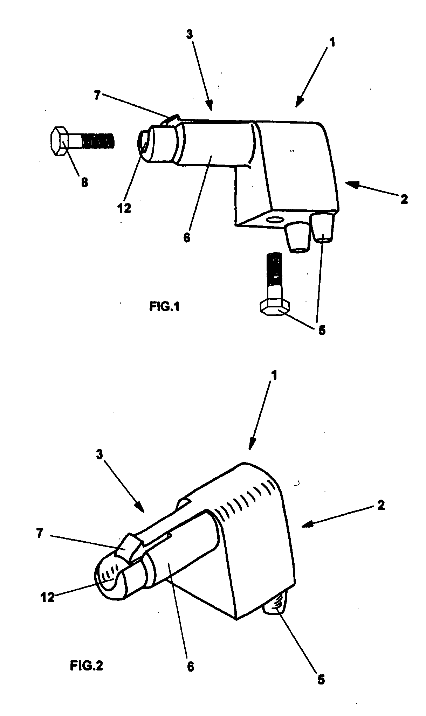

Figur 1 zeigt die Unteransicht einer Ausführungsform des einteiligen Stücks mit Befestigungselementen.

Figur 2 zeigt eine Draufsicht der Ausführungsform des einteiligen Stücks aus Figur 1.

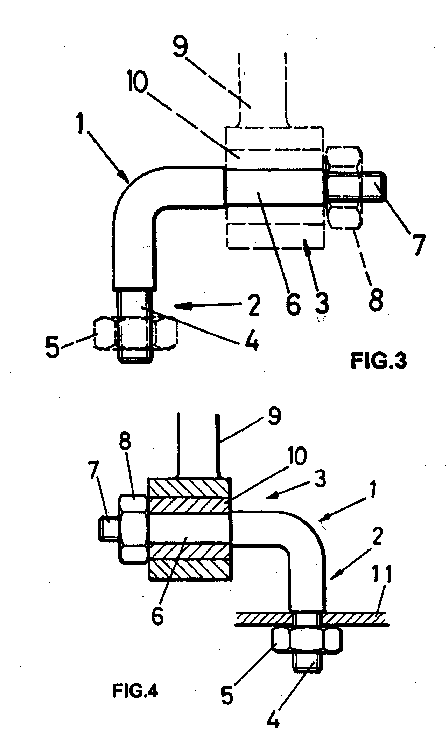

Figur 3 zeigt eine Ansicht des einteiligen Stücks, das Gegenstand der Erfindung ist.

Figur 4 zeigt das einteilige Stück der Figur 3, befestigt am Rahmen der Waschmaschine und mit angebautem Stoßdämpfer.

### BESCHREIBUNG EINES BEISPIELS DER AUSFÜHRUNG DER ERFINDUNG

Im Nachstehenden erfolgt eine Beschreibung der Erfindung auf der Grundlage der oben kommentierten Figuren.

Die Befestigungsvorrichtung ermöglicht die Befestigung eines Stoßdämpfers 9 am Grundrahmen 11 einer Waschmaschine für Kleider, wobei dieser Stoßdämpfer 9 Bestandteil einer Befestigungseinheit des Schwingsystems der Waschmaschine ist.

Sie wird mittels eines einteiligen Plastikstücks 1 bereitgestellt, gebildet aus zwei in einem Winkel zueinander stehenden Teilen: einem ersten Teil 2, der mit einem Bereich mit selbstschneidender Öffnung 4 für den Einbau einer Befestigungsschraube mit zwei Verrieglungszapfen 5 ausgestattet ist, und einem zweiten Teil 3, in dem das Ende des Stoßdämpfers angepasst und angebaut wird.

Der Winkel, den der erste Teil 2 und der zweite Teil 3 bilden beträgt vorzugsweise 90° und in diesem Sinne verhält sich der Teil 1 wie ein Träger, der an einem Ende aufliegt.

Der zweite Teil 3 besitzt einen ersten Bereich 6 für die Anpassung des elastischen Blocks (Kissen zum Dämpfen der Vibrationen des Stoßdämpfers gegen das Stück) 10, der normalerweise in der Öffnung des Endes des Stoßdämpfers 9 angeordnet ist und als elastisches und flexibles Element wirkt. Nach diesem Bereich 6 wird eine Klammer 7 zur Befestigung des Stoßdämpfers 9 angeordnet und im Kern des zweiten Teils 3 eine Öffnung 12 für die Anpassung der entsprechenden Befestigungsmutter 8 oder eines anderen beliebigen axialen Befestigungselements für den Fall, dass die Klammer 7 unbrauchbar geworden ist oder eine bessere Befestigung des Stoßdämpfers erforderlich ist.

Die Ausführung der Befestigungsvorrichtung durch ein einteiliges Stück, so wie beschrieben, ermöglicht es, eine Reihe von Teilen zu beseitigen, die in den gegenwärtigen Befestigungssystemen vorhanden sind, vor allem aber ermöglicht sie die Integration in den Stoßdämpfer selbst, unabhängig von der Art oder dem Hersteller der in der Maschine einzubauenden Stoßdämpfer.

Der Einbau in die Maschine ist viel einfacher, da nicht mehr als der Verbindungspunkt 11 mit dem Rahmen erforderlich ist.

## Patentansprüche

1. Befestigungsvorrichtung für die Befestigung eines Stoßdämpfers einer Waschmaschine, bei der diese Stoßdämpfer (9) die Befestigungsmittel des Schwingsystems (11) der Waschmaschine darstellen, **gekennzeichnet dadurch, dass** sie aus einem einteiligen Stück (1) besteht, mit einem ersten Teil (2) und einem zweiten Teil (3), die einen Winkel bilden, wobei der erste Teil (2) für die Befestigung des Stücks (1) am Rahmen (11) ausgebildet ist und sich der zweite Teil (3) mit dem Ende des Stoßdämpfers (9) verbindet und daran anpasst.

2. Befestigungsvorrichtung nach Anspruch 1, gekennzei chnet dadurch, dass der erste Teil (2) einen Bereich (4) besitzt, in dem sich ein Befestigungsmittel (5) des Stücks (1) am Rahmen (11) anpasst.

3. Befestigungsvorrichtung nach Anspruch 1 oder 2, **gekennzeichnet dadurch, dass** der zweite Teil (3) zumindest einen Bereich (6) besitzt, der sich mit dem Ende des Stoßdämpfers (9) verbindet und daran anpasst, ebenso wie ein Befestigungsmittel (7) des Stoßdämpfers (9).

4. Befestigungsvorrichtung nach einem der Ansprüche 1 bis 3, **gekennzeichnet dadurch, dass** der zweite Teil (3) des einteiligen Stücks (1) mit einem Bereich (12) für die Anpassung eines Befestigungsmittels (8) ausgestattet ist.

5. Befestigungsvorrichtung nach den Ansprüchen 3 und 4, **gekennzeichnet dadurch, dass** der Bereich (6) des zweiten Teils (3) des einteiligen Stücks (1) sich an das elastische Element (10) anpasst, das in der Öffnung des Endes des Stoßdämpfers (9) befestigt wird.

6. Befestigungsvorrichtung nach einem der vorstehenden Ansprüche, **gekennzeichnet dadurch, dass** der Winkel, den der erste Teil (2) und der zweite Teil (3) des Stücks (1) zur Befestigung bilden, ein 90-Grad-Winkel ist.
